# EUROPEAN PATENT SPECIFICATION

(11) **EP 2 846 053 B1**
(45) Date of publication and mention of the grant of the patent: **27.07.2016**
(21) Application number: 13183247.9
(22) Date of filing: 05.09.2013
(51) Int. Cl.: F16B 35/06

(54) **Screw capable of easily drilling holes and dregs removing**
Schraube zum einfachen Bohren von Löchern und zur Beseitigung von Spänen
Vis pouvant facilement percer des trous de forage et éliminer des copeaux

(43) Date of publication of application: 11.03.2015
(73) Proprietor: Huang, Shu-Chin, Kaohsiung City (TW)
(72) Inventor: Huang, Shu-Chin, Kaohsiung City (TW)
(74) Representative: Treeby, Philip David William

(56) References cited:
- US-A- 1 175 665
- US-A- 5 400 845
- US-A- 5 516 248
- US-A1- 2005 226 701
- US-A1- 2010 158 634
- US-B1- 6 334 748

## Description

### FIELD OF THE INVENTION

The present invention relates to screws, and in particular to a screw capable of easily drilling of holes and with the function of dregs removing.

### BACKGROUND OF THE INVENTION

Screws have different features based on the objects to be drilled (see e.g. US 2010/0158634). These features are aimed at to have preferred drilling speed, high dregs removing rate, and easiness in drilling operation. However, the dregs generated in drilling will be left in the drilling hole, but this residue left in the hole is possible to cause that the object to be drilled cracks. The main reason of such a defect is that the dregs left in the hole will further expand the hole to have a larger size, as a result the object to be drilled cracks. A further reason is that the outer diameter of the screw head is larger than an inner diameter of the hole. Then the screw head is embedded into the hole, it is possible that the hole will crack. It is desired to cut, expand and smooth the hole before embedding the screw head so that the larger screw head can be flatly embedded into the hole with an easy and comfortable operation. Furthermore, no cracking forms and the edge of the hole is smooth.

### SUMMARY OF THE INVENTION

The object of the present invention is to provide a screw capable of drilling holes easily and removing dregs effectively, which has the advantages of providing a screw by which the screw head can be easily embedded into the drilling hole with a crack-proof effect; proving a screw by which the drilling hole can be cut and expanded before embedding the screw head for dregs removing so that the screw head can be embedding to the drilling hole smoothly; providing a screw by which the edge of the drilling hole will not expose out.

To achieve above object, the present invention provides a screw capable of easily drilling holes and dregs removing, comprising: a head and a stem extending from a lower portion of the head; the head and the stem being formed integrally; the head being formed by an upper portion and a lower portion; the upper portion being a round disk with flat upper surface; and the lower portion being an expanding from a lower side of the round disk and being connected to the stem; a lower surface of the round disk disconnected to the lower portion is formed as an annular ring; wherein the annular ring of the round disk of the head is formed with a plurality of inclined protrusion; the recesses between the protrusions extend from an inner edge of the annular ring to an outer edge of the annular ring and are arranged along un-radial paths; and a periphery of the lower portion of the head is formed with at least one knife sheet which extends from the annular ring of the round disk of the head to the stem with a predetermined distance; and the direction of the knife sheet is inclined to an axis of the lower portion of the head.

### BRIEF DESCRIPTION OF DRAWINGS

Fig. 1 shows the embodiment of the present invention.
Fig. 2 shows another embodiment of the present invention.
Fig. 3 shows a further embodiment of the present invention.
Fig. 4 is a cross sectional view along line B-B of Fig. 3.
Fig. 5 shows yet an embodiment of the present invention.
Fig. 6 is a cross sectional view viewed from a line C-C of Fig. 5 of the present invention.
Fig. 7 shows a further embodiment of the present invention.
Fig. 8 is a schematic view viewed from a line D-D of Fig. 7 of the present invention.
Fig. 9 shows an embodiment showing a flat annular ring according to the present invention.
Fig. 10 shows an embodiment showing a teethed annular ring according to the present invention.
Fig. 11 shows another embodiment of the present invention.
Fig. 12 shows another embodiment of the present invention.
Fig. 13 shows another embodiment of the present invention.
Fig. 14 shows another embodiment of the present invention.
Fig. 15 shows another embodiment of the present invention.
Fig. 16 shows another embodiment of the present invention.
Fig. 17 shows another embodiment of the present invention.
Fig. 18 shows another embodiment of the present invention.
Fig. 19 shows another embodiment of the present invention.
Fig. 20 shows another embodiment of the present invention.

### DETAILED DESCRIPTION OF THE PREFERRED EMBODIMENTS

In order that those skilled in the art can further understand the present invention, a description will be described in the following in details. However, these descriptions and the appended drawings are only used to cause those skilled in the art to understand the objects, features, and characteristics of the present invention.

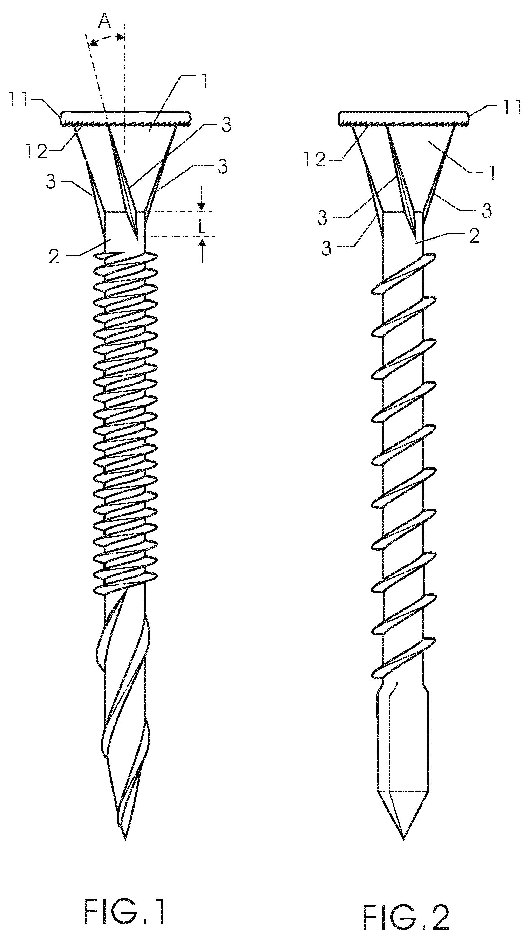

With reference to Figs. 1 and 2, the structure of the present invention is illustrated.

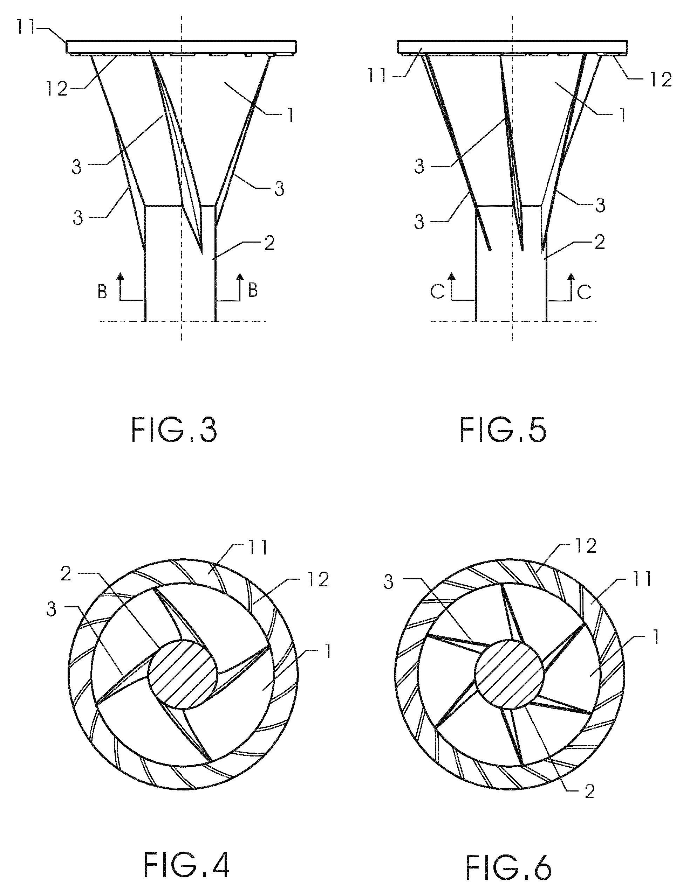

Referring to Figs. 1 and 2, the embodiment of the present invention is illustrated, wherein the design of the present invention can be widely used for crack-proof screws and wood screws, and others for drilling holes and dregs removing. With reference to Figs. 3 to 20, it is illustrated that the present invention can be widely used in trumpet form screws, tapered screws or post form screws. The details of these screws will be described hereinafter.

With reference to Figs. 1 and 2, the screw of the present invention includes a head 1 and a stem 2 which is formed integrally.

A lower portion of the head 1 has a round tapered shape and is connected to the stem 2 at the lowermost end thereof. An upper portion of the round tapered head 1 is formed as a flat round disk 11. A lower side of the round disk 11 is connected to an upper end of the lower tapered portion of the head 1. A lower side of the round disk unconnected to the tapered portion is formed as an annular ring as illustrated in Figs. 4 and 6.

The annular ring of the round disk 11 of the head 1 is formed with a plurality of inclined protrusion 12. The recesses between the protrusions 12 are arranged along un-radial paths. These recesses may be straight lines (referring to Fig. 6) or cambered (referring to Fig. 4).

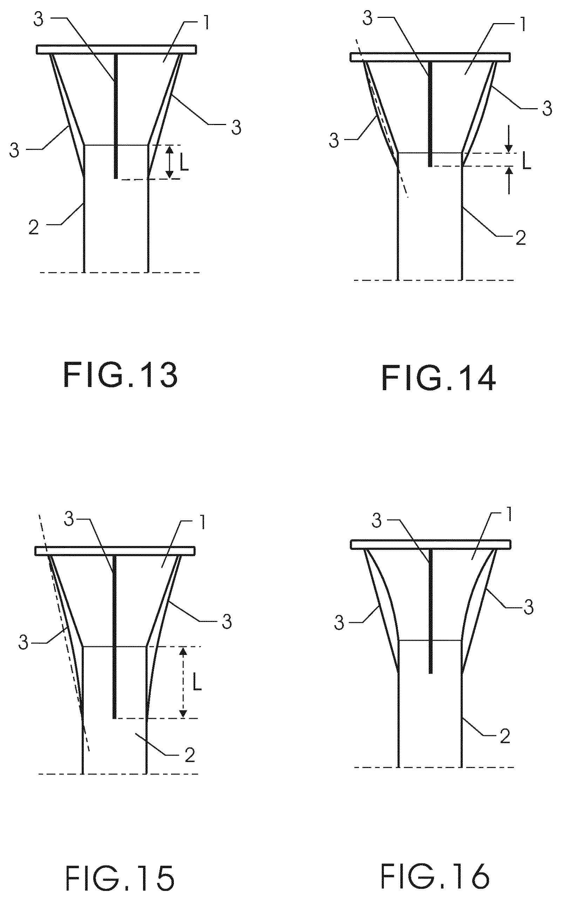

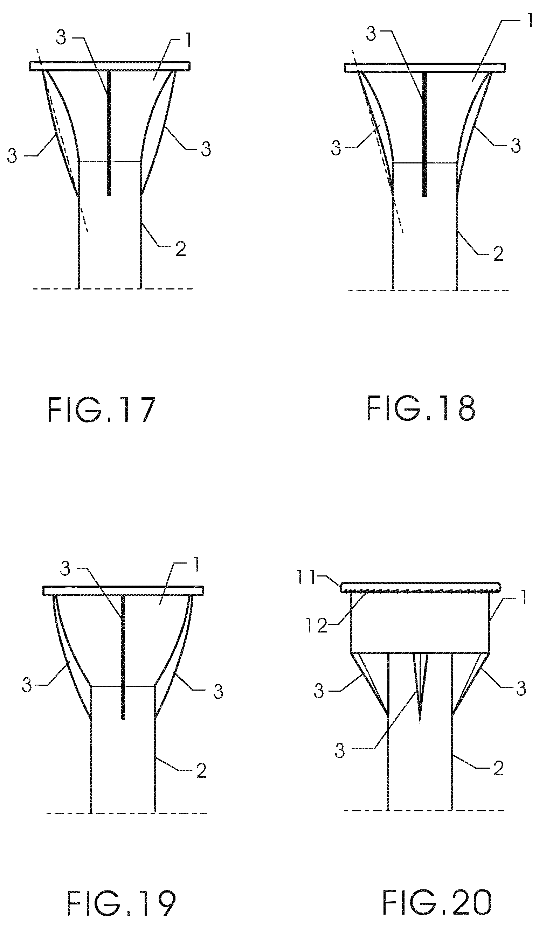

A periphery of the lower tapered portion of the head 1 is formed with at least one knife sheets 3 which extended from the annular ring of the round disk 11 of the head 1 to the stem 2. Furthermore, the knife sheets 3 are extended to a distance L of the stem 2. The direction of the knife sheet 3 is inclined to the axis of the lower tapered portion of the head 1. The knife edge of the knife sheet 3 may be straight (referring to Figs. 1 to 3, 5, 7, 12 and 16) or inwardly cambered (referring to Figs. 15 and 18) or outwardly cambered (referring to Figs. 14, 17 and 19). Two sides of the knife edge of the knife sheet 3 may be formed with cut planes (referring to Fig. 20). The direction of the knife edges of the knife sheet 3 can be non-radial (referring to Figs. 1 to 12), or radial (referring to Figs. 13 to 20).

With reference to Figs. 3 and 4, an lower surface of each protrusion of the annular ring of the head 1 is parallel to the upper surface of the round disk 11. The recesses between the protrusions 12 of the annular ring of the head 1 are not radially arranged and are cambered; and the knife edges of the knife sheets 3 are not radially arranged and are cambered. That is, the knife edge has an inclined angle A with respect to the axis of the lower tapered portion of the head 1. Referring to Figs. 5 and 6, the protrusions 12 of the annular ring of the head 1 is parallel to the upper surface of the round disk 11. The recesses between the protrusions 12 of the annular ring of the upper portion of the head 1 are not radially arranged and are straight; and the knife edges of the knife sheets 3 are not radially arranged and are straight. That is, the knife edge has an inclined angle A with respect to the axis of the lower tapered portion of the head 1.

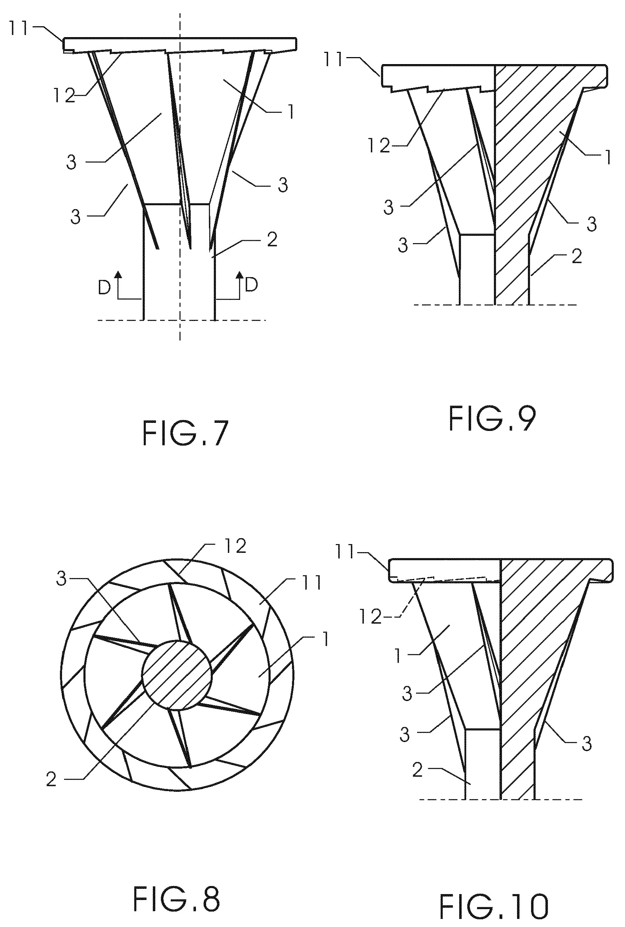

Referring to Figs. 7 and 8, a lower surface of each protrusions of the annular ring of the head 1 is not parallel to the upper surface of the round disk 11. The recesses between the protrusions 12 of the annular ring of the head 1 are not radially arranged and are straight; and the knife edges of the knife sheets 3 are not radially arranged and are straight. That is, the knife edge has an inclined angle A with respect to the axis of the lower tapered portion of the head 1.

In Fig. 9, the lower annular ring 11 is flat and in Fig. 10, the annular ring has a teethed surface.

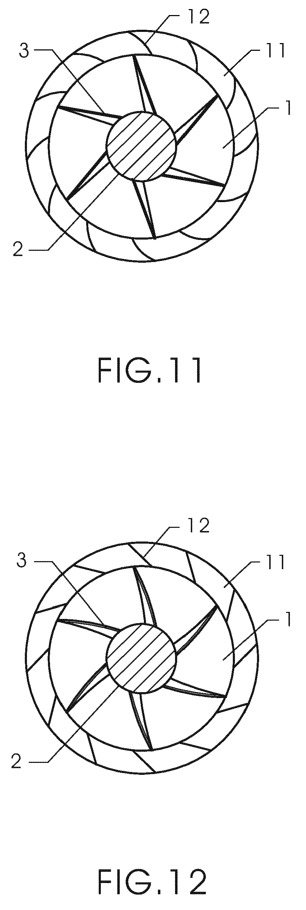

As illustrated in Fig. 11, the recesses between the protrusions 12 of the annular ring of the upper portion of the head 1 are not radially arranged and are cambered; and the knife edges of the knife sheets 3 are not radially arranged and are straight. That is, the knife edge has an inclined angle A with respect to the axis of the lower tapered portion of the head 1.

As illustrated in Fig. 12, the recesses between the protrusions 12 of the annular ring of the upper portion of the head 1 are not radially arranged and are straight; and the knife edges of the knife sheets 3 are not radially arranged and are cambered. That is, the knife edge has an inclined angle A with respect to the axis of the lower tapered portion of the head 1.

Referring to Figs. 13 and 16, it is illustrated that the knife edge of the knife sheet 3 is straight.

With reference to Figs. 13, 17 and 19, it is illustrated that the knife edge of the knife sheet 13 is outwardly cambered.

With reference to Figs. 15 and 18, it is illustrated that the knife edge of the knife sheet 13 is inwardly cambered.

With reference to Fig. 20, it is illustrated that the lower portion of the head 1 is a round cylinder and the knife sheet 3 is only at the stem 2.

By above mentioned structure of the present invention, when the screw drills into an object, the outer diameter of the head 1 is greater than that of the stem 2, and the dregs generated in drilling will hinder the drilling operation of the screw. The knife sheets 3 of the present invention has the effect of cutting and expanding the drilling hole further so that dregs can be discharged effectively and thus the screw can drill into the object easily. The protrusions 12 at the annular ring of the head 1 have the effect of preventing the expose of the dregs and presenting a flat outer look.

The present invention is thus described. However, it will be obvious that the same may be varied in many ways. Such variations are not to be regarded as a departure from the scope of the present invention

## Claims

1. A screw capable of drilling holes easily and discharging dregs effectively, comprising:
a head (1); and
a stem (2) extending from a lower portion of the head (1); the head (1) and the stem (2) being formed integrally;.
wherein the head (1) is formed by an upper portion and a lower portion; the upper portion is a round disk (11); and the lower portion of the head (1) extends from a lower side of the round disk (11) to an uppermost end of the stem (2); a lower surface of the round disk (11) disconnected to the lower portion is formed as an annular ring;
**characterized in that** the annular ring of the round disk (11) of the head (1) is formed with a plurality of inclined protrusion (12); the recesses between the protrusions (12) extend from an inner edge of the annular ring to an outer edge of the annular ring and are arranged along un-radial paths; and
wherein a periphery of the lower portion of the head (1) is formed with at least one knife sheet (3) which extends from the annular ring of the round disk (11) of the head (1) to the stem (2); the knife sheets (3) extends into the stem (2) with a predetermined distance (L); and the direction of the knife sheet (3) is inclined to an axis of the lower portion of the head (1).

2. The screw as claimed in claim 1, wherein the at least one knife sheet (3) is cambered and is arranged spirally.

3. The screw as claimed in claim 1, wherein the at least one knife sheet (3) is straight.

4. The screw as claimed in claim 1, wherein the protrusions (12) are cambered.

5. The screw as claimed in claim 1, wherein the protrusions (12) are straight.

6. The screw as claimed in claim 1, wherein a knife edge of the knife sheet (3) is inwardly cambered.

7. The screw as claimed in claim 1, wherein a knife edge of the knife sheet (3) is outwardly cambered.

8. The screw as claimed in claim 1, wherein two lateral sides of a knife edge of the knife sheet (3) is cut with a cut surface.

## Patentansprüche

1. Schraube, die in der Lage ist, leicht Löcher zu bohren und Späne wirksam auszutragen, umfassend:
einen Kopf (1); und
einen Schaft (2), der sich von einem unteren Abschnitt des Kopfs (1) erstreckt; wobei der Kopf (1) und der Schaft (2) einstückig gebildet sind;
wobei der Kopf (1) durch einen oberen Abschnitt und einen unteren Abschnitt gebildet wird; wobei es sich bei dem oberen Abschnitt um eine runde Scheibe (11) handelt; und sich der untere Abschnitt des Kopfs (1) von einer Unterseite der runden Scheibe (11) zu einem obersten Ende des Schafts (2) erstreckt;
wobei eine untere Oberfläche der runden Scheibe (11), die von dem unteren Abschnitt getrennt ist, als Kreisring gebildet ist;
**dadurch gekennzeichnet, dass** der Kreisring der runden Scheibe (11) des Kopfs (1) mit einer Vielzahl von geneigten Vorsprüngen (12) gebildet ist; wobei sich die Vertiefungen zwischen den Vorsprüngen (12) von einem inneren Rand des Kreisrings zu einem äußeren Rand des Kreisrings erstrecken und entlang nicht radialen Bahnen angeordnet sind; und
wobei eine Umrandung des unteren Teils des Kopfs (1) mit mindestens einer Schneidklinge (3) gebildet ist, die sich von dem Kreisring der runden Scheibe (11) des Kopfs (1) zu dem Schaft (2) erstreckt; wobei sich die Schneidklingen (3) um eine vorherbestimmte Strecke (L) in den Schaft (2) erstrecken; und die Richtung der Schneidklinge (3) gegenüber einer Achse des unteren Abschnitts des Kopfs (1) geneigt ist.

2. Schraube nach Anspruch 1, wobei die mindestens eine Schneidklinge (3) gewölbt ist und spiralförmig angeordnet ist.

3. Schraube nach Anspruch 1, wobei die mindestens eine Schneidklinge (3) gerade ist.

4. Schraube nach Anspruch 1, wobei die Vorsprünge (12) gewölbt sind.

5. Schraube nach Anspruch 1, wobei die Vorsprünge (12) gerade sind.

6. Schraube nach Anspruch 1, wobei eine Schneidkante der Schneidklinge (3) nach innen gewölbt ist.

7. Schraube nach Anspruch 1, wobei eine Schneidkante der Schneidklinge (3) nach außen gewölbt ist.

8. Schraube nach Anspruch 1, wobei zwei laterale Seiten einer Schneidkante der Schneidklinge (3) mit einer Schleiffläche geschliffen sind.

## Revendications

1. Vis en mesure de percer des trous avec facilité et en mesure de décharger les copeaux de manière efficace, comportant :
une tête (1) ; et
un fût (2) s'étendant depuis une partie inférieure de la tête (1) ; la tête (1) et le fût (2) étant formés d'un seul tenant ;
dans laquelle la tête (1) est formée par une partie supérieure et une partie inférieure ; la partie supérieure est un disque rond (11) ; et la partie inférieure de la tête (1) s'étend depuis un côté inférieur du disque rond (11) jusqu'à une extrémité se trouvant le plus en haut du fût (2) ; une surface inférieure du disque rond (11) déconnectée par rapport à la partie inférieure est formée sous la forme d'une bague annulaire ;
**caractérisée en ce que** la bague annulaire du disque rond (11) de la tête (1) est formée avec une pluralité de parties saillantes inclinées (12) ; les évidements entre les parties saillantes (12) s'étendent depuis un bord intérieur de la bague annulaire jusqu'à un bord extérieur de la bague annulaire et sont agencés le long de chemins non radiaux ; et
dans laquelle une périphérie de la partie inférieure de la tête (1) est formée avec au moins une feuille formant lame (3) qui s'étend depuis la bague annulaire du disque rond (11) de la tête (1) jusqu'au fût (2) ; la feuille formant lame (3) s'étend jusque dans le fût (2) sur une distance prédéterminée (L) ; et la direction de la feuille formant lame (3) est inclinée par rapport à un axe de la partie inférieure de la tête (1).

2. Vis selon la revendication 1, dans laquelle ladite au moins une feuille formant lame (3) est cambrée et est agencée en spirale.

3. Vis selon la revendication 1, dans laquelle ladite au moins une feuille formant lame (3) est droite.

4. Vis selon la revendication 1, dans laquelle les parties saillantes (12) sont cambrées.

5. Vis selon la revendication 1, dans laquelle les parties saillantes (12) sont droites.

6. Vis selon la revendication 1, dans laquelle un bord de lame de la feuille formant lame (3) est cambré vers l'intérieur.

7. Vis selon la revendication 1, dans laquelle un bord de lame de la feuille formant lame (3) est cambré vers l'extérieur.

8. Vis selon la revendication 1, dans laquelle deux côté latéraux d'un bord de lame de la feuille formant lame (3) sont découpés pour présenter une surface de coupe.
